# EUROPEAN PATENT APPLICATION

(11) **EP 1 553 544 A1**
(43) Date of publication of application: **13.07.2005**
(21) Application number: 04000366.7
(22) Date of filing: 09.01.2004
(51) Int. Cl.: G09F 3/04, B29C 33/12, B29C 49/24

(54) **Tamperproof label integrally moulded with a product and method for manufacturing a product with said label**

(71) Applicant: Huang, Sheng-Chang, Tainan City (TW); Supreme Technic Package Co., Ltd., Tainan City (TW)
(72) Inventor: Huang, Sheng-Chang, Tainan City, Taiwan (KR)
(74) Representative: Viering, Jentschura & Partner

(57) **Abstract**

A fake-preventing label formed integral with a product in a mold includes an inner decorative layer (1) printed thereon with designs or letters and an outer protective layer (2) bonded with the inner decorative layer. The inner decorative layer and/or the outer protective layer respectively have holes (10,20), or a recess (30) and/or provided with a metallic layer or an ornament (11). After the label is placed in the mold and formed integral with the product therein, the holes and/or the metallic layer and/or the ornament of the label produce various appearances, producing a product with a fake-preventing label. And a method for manufacturing a product with a fake-preventing label includes steps of placing a label in a mold and of injecting material in the mold for shaping a product with the label bonded together.

## Description

### FIELD OF THE INVENTION

This invention relates to a fake-preventing label formed integral with a product in a mold, particularly to one placed in a mold and formed integral with a product therein when the product is made by injection molding or vacuum molding or hollow molding or blow molding, having function of fake prevention of the product. And the invention also relates to a method of manufacturing a product with the fake-preventing label.

### BACKGROUND OF THE INVENTION

Most plastic containers or products for sale respectively have the surface adhered with a plastic label printed with decorative designs or letters, but these designs or letters are neither beautiful nor vivid, unable to attract consumers' attention.

In view of this condition, some plastic containers or products are respectively formed integral with a self-adhering plastic label. The plastic label is printed with designs in advance, and has its inner surface coated with adhesives and the outer surface pasted with a bonding layer. Further, the designs on the plastic container or product are embossed, increasing printing cost and not conforming to economic gain.

Other plastic containers or products respectively have the surface pasted with a self-bonding label as a trademark and for decoration, giving neither integral visual feeling nor esthetic impression.

Still other plastic containers or products respectively have the surface pasted with a self-bonding label as a trade mark and for decoration, and the self-bonding label is covered with a contractile film which is then heated and bonded on the outer surface of the plastic container or product, but such a contractile film is likely to fall off.

### SUMMARY OF THE INVENTION

The objective of the invention is to offer a fake-preventing label formed integral with a plastic container or product in a mold and a method for manufacturing a product with a fake-preventing label, elevating the value of plastic containers or products and having effect of fake prevention.

The features of the invention are described below.
1. The label formed integral with a product in a shaping mold includes an inner decorative layer and an outer protective layer. The inner decorative layer is printed with designs or letters in advance and boned with the outer protective layer. Then, the label is placed in a mold to be adhered on a product shaped therein, able to prevent the product from easily faked.
2. The inner decorative layer and the protective layer of the label respectively have the whole or a part bored with through holes, or a part provided with metallic layers or ornaments. Thus, after the label is formed integral with a product in a mold, the through holes or the metallic layers or the ornaments will produce different appearances on the surface of the product, obtaining a fake preventing purpose.
3. The inner decorative layer and the protective layer of the label are made of plastic, aluminum foil or paper, and both layers can be made of a same material or of different materials.
4. After the label is placed in a product shaping mold and formed integral with the product therein, the metallic layers or the ornaments provided on parts of the inner decorative layer or the protective layer of the label will produce different shapes on the surface of the product by a force of closing a male and a female mold together, thus obtaining a fake preventing objective.

### BRIEF DESCRIPTION OF DRAWINGS

This invention will be better understood by referring to the accompanying drawings, wherein:
Fig. 1 is an upper view and a partial magnified view of a first preferred embodiment of a label in the present invention;
Fig. 2 is an upper view and a partial magnified view of a second preferred embodiment of a label in the present invention;
Fig. 3 is an upper view and a partial magnified view of a third preferred embodiment of a label in the present invention;
Fig. 4 is an upper view and a partial magnified view of a fourth preferred embodiment of a label in the present invention;
Fig. 5 is an upper view and a partial magnified view of a fifth preferred embodiment of a label in the present invention;
Fig. 6 is an upper view and a partial magnified view of a sixth preferred embodiment of a label in the present invention;
Fig. 7 is an upper view and a partial magnified view of a seventh preferred embodiment of a label in the present invention;
Fig. 8 is an upper view and a partial magnified view of an eighth preferred embodiment of a label in the present invention;
Fig. 9 is an upper view and a partial magnified view of a ninth preferred embodiment of a label in the present invention;
Fig. 10 is an upper view and a partial magnified view of a tenth preferred embodiment of a label in the present invention;
Fig. 11 is an upper view and a partial magnified view of an eleventh preferred embodiment of a label in the present invention;
Fig. 12 is a side cross-sectional view of the line A-A in Fig. 11;
Fig. 13 is an upper view and a partial magnified view of a twelfth preferred embodiment of a label in the present invention;
Fig. 14 is an upper view and a partial magnified view of a thirteenth preferred embodiment of a label in the present invention;
Fig. 15 is a flow chart of manufacturing a product a fake preventing label in the present invention; and
Fig. 16 is a front view of a plastic container or product bonded with the label in the present invention.

### DETAILED DESCRIPTION OF THE INVENTION

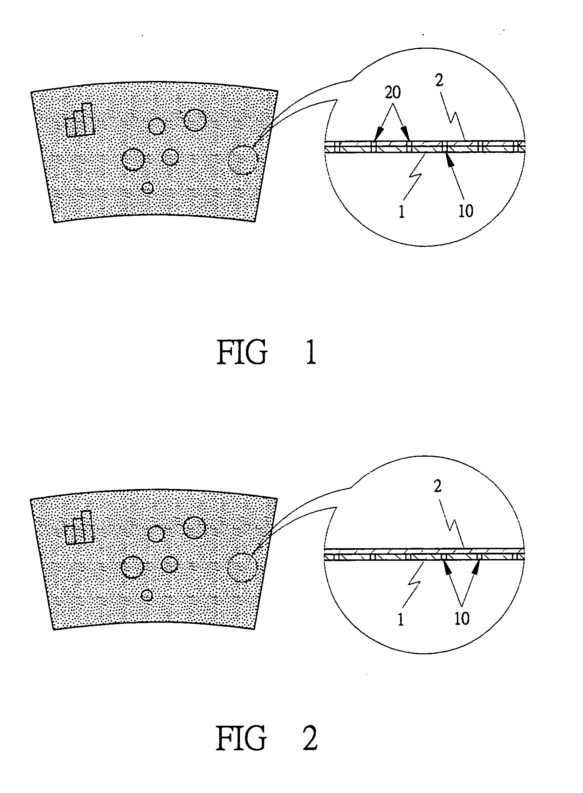

A first and a second preferred embodiment of a fake-preventing label formed integral with a product in a mold in the present invention includes an inner decorative layer 1 and an outer protective layer 2, as shown in Figs. 1 and 2.

The inner protective layer 1 made of plastic, aluminum foil or paper has its surface printed with designs or letters and is bored with freely distributed and different-shaped holes 10, as shown in Fig. 1.

The outer protective layer 2 bonded with the surface of the inner decorative layer 1 is provided with freely distributed and different-shaped holes 20, as shown in Fig. 1, or provided with no holes 20, as shown in Fig. 2.

The freely distributed and different-shaped holes 10, 20 of the inner decorative layer 1 and (or) the protective layer 2, as shown in Figs. 1 and 2, can be bored respectively in advance or bored after the inner decorative layer 1 and the outer protective layer 2 are bonded together.

Further, the inner decorative layer 1 and the outer protective layer 2 can be made of a same material or of different materials, which preferably can be completely bonded with the material of a product.

To adhere the label on a product, the label is placed in a mold and heated to be completely bonded on the surface of the product by the high temperature produced when the product is injection molded or hollow molded or vacuum molded or blow molded. Simultaneously, the freely distributed and different-shaped holes 10, 20 of the inner decorative layer 1 and the outer protective layer 2 will make the label and the product bonded together completely through air permeation, thus obtaining a product formed integral with a fake-preventing label.

A third, a fourth, a fifth and a sixth preferred embodiment of a fake-preventing label formed integral with a product in a mold in the present invention include an inner decorative layer (1A) and an outer protective layer (2A).

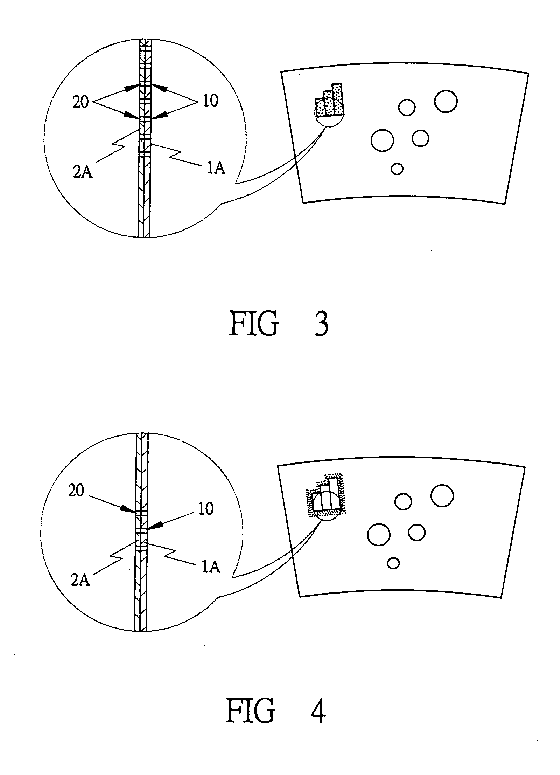

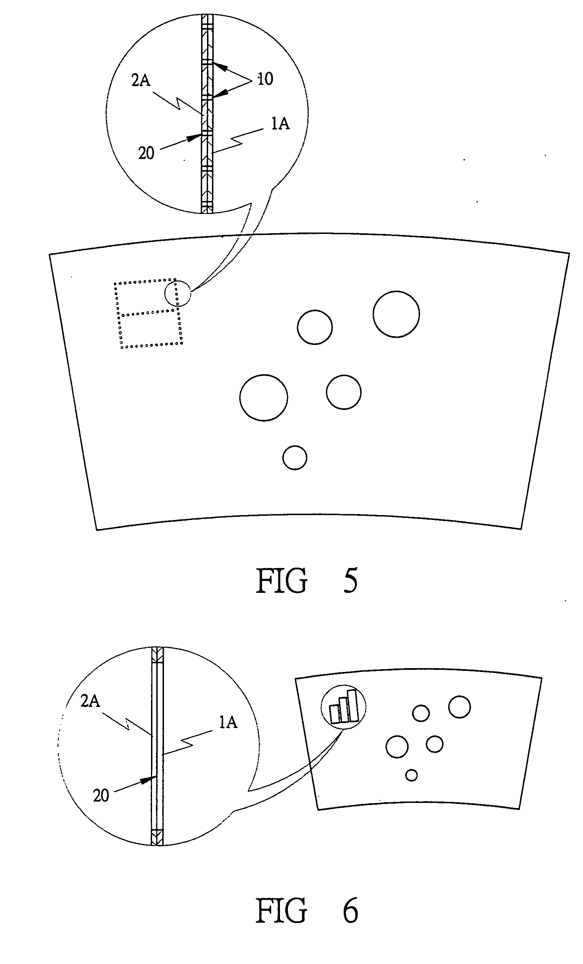

The inner decorative layer (1A) made of plastic, aluminum foil or paper has its surface printed with designs or letters and some specific section bored with freely distributed and different-shaped holes 10, as shown in Fig. 3, or its circumference bored with the holes 10, as shown in Fig. 4, or its letters or designs provided with the holes 10, as shown in Fig. 5, or the specific section bored with different-shaped holes 10, as shown in Fig. 6.

The outer protective layer (2A) bonded with the surface of the inner decorative layer (1A) has some specific section bored with freely distributed and different-shaped holes 20, as shown in Fig. 3. The outer protective layer (2A) is also bored with freely distributed and different-shaped holes 20 around the circumference of the specific section, as shown in Fig. 4, or bored with the holes 20 matching with the holes 20 of the letters or the designs of the inner decorative layer (1A), as shown in Fig.

5, or bored with the holes 20 matching with the holes 20 of the specific section of the inner decorative layer (1A), as shown in Fig. 6.

After the label is produced, it is placed in a mold in which a product is to be formed to be bonded together with the product therein when the product is injection molded, thus obtaining a product formed integral with a fake-preventing label.

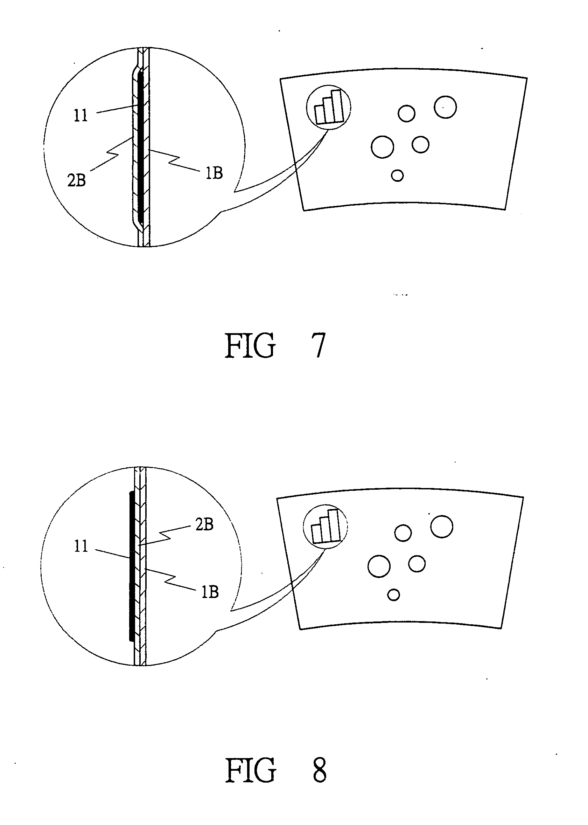

A seventh, eighth, ninth and tenth preferred embodiment of a fake-preventing label formed integral with a product in a mold in the present invention, as shown in Figs. 7 to 10, includes an inner decorative layer (1B) and an outer protective layer (2B).

The inner decorative layer (1B) made of plastic, aluminum foil or paper has its surface printed with designs or letters.

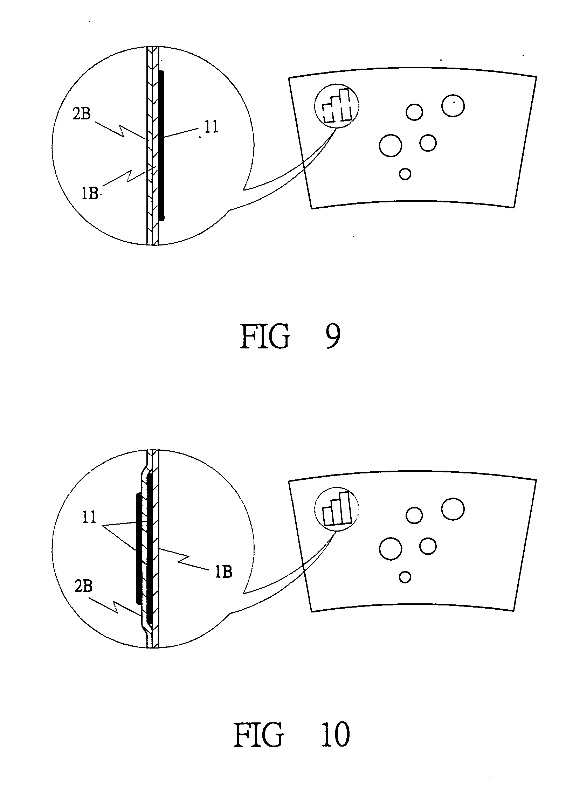

The outer protective layer (2B) is bonded with the surface of the inner decorative layer (1B). An ornament 11 is wrapped between a part of the inner decorative layer (1B) and a part of the protective layer (2B), as shown in Fig. 7. The ornament 11 can also be provided on a partial surface of the protective layer (2B), as shown in Fig. 8, or on a partial surface of the inner decorative layer (1B), as shown in Fig. 9, or provided on a partial surface of both the inner decorative layer (1B) and the outer protective layer (2B), as shown in Fig. 10. The ornaments 11 can be made of any material, which can be peeled off, such as metal, plastic, paper or dried plant parts.

After the label is produced, it is placed in a mold to be bonded together with a product therein before the product is injection molded, obtaining a product formed integral with a fake- preventing label.

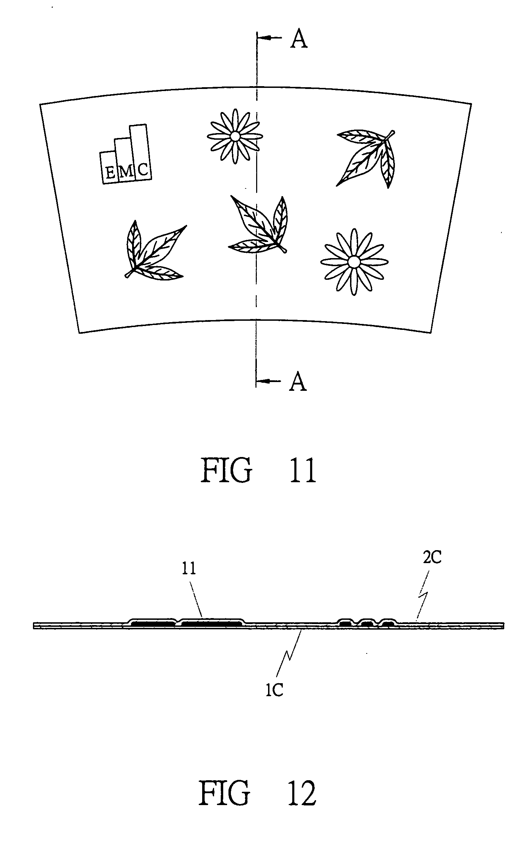

An eleventh preferred embodiment of a fake-preventing label formed integral with a product in a mold in the present invention, as shown in Figs. 11 and 12, includes an inner decorative layer (1C) made of plastic, aluminum foil or paper and an outer protective layer (2C).

The outer protective layer (2C) is bonded with the surface of the inner decorative layer (1C), with an ornament 11 made of metal, plastic, paper or dried plant provided between the inner decorative layer (1C) and the outer protective layer (2C).

Then, the label is placed in the mold to be bonded together with the product therein before the product is injection molded, obtaining a product formed integral with a fake-preventing label.

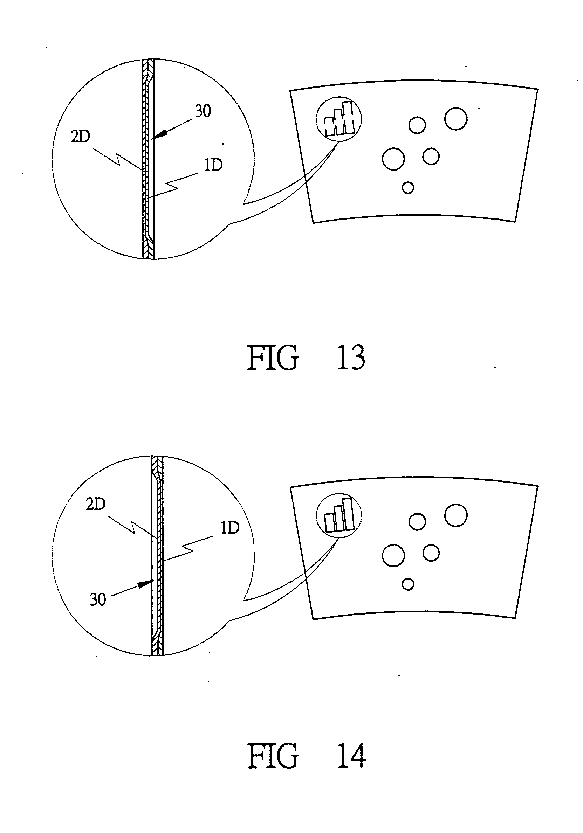

A twelfth and a thirteenth preferred embodiment of a fake-preventing label formed integral with a product in a mold in the present invention, as shown in Figs. 13 and 14, includes an inner decorative layer (1D) made of plastic, aluminum foil or paper and an outer protective layer (2D).

The outer protective layer (2D) is bonded with the inner decorative layer (1D). The inner decorative layer (1D) has a recess 30, as shown in Fig. 13, or the outer protective layer (2D) has a recess 30, as shown in Fig. 14.

Then, the label is placed in a mold to be bonded together with the product therein before the product is injection molded, obtaining a product formed integral with a fake-preventing label.

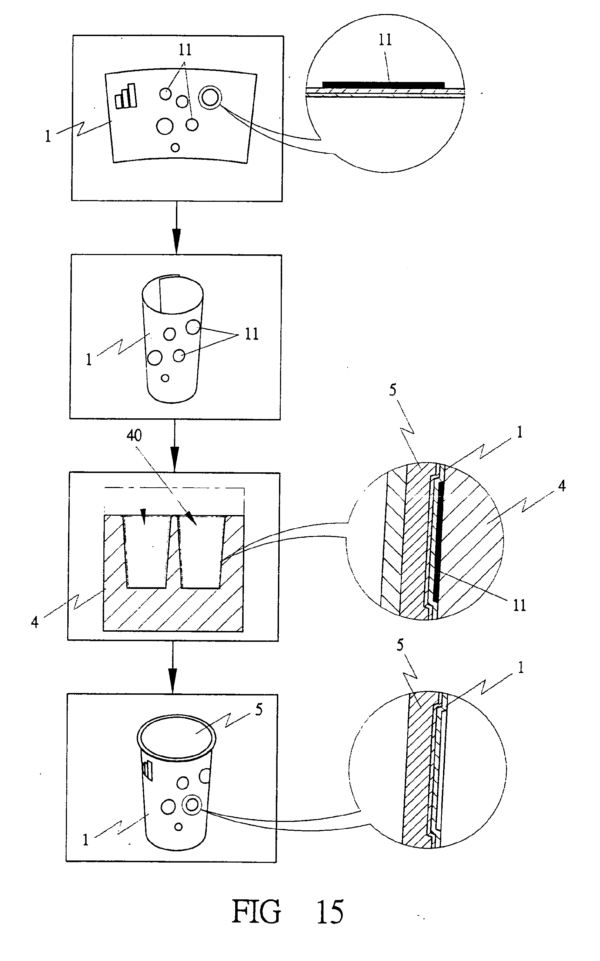

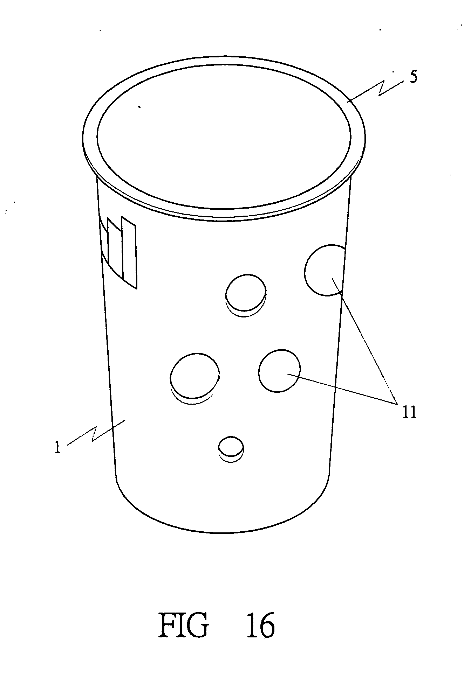

When the label described in the above-mentioned preferred embodiments is placed in the mold cavity 40 of a mold 4, the label 1 can be bonded together with the surface of the product 5 after the product 5 is formed therein, as shown in figs. 15 and 16. Thus, either the freely distributed and different-shaped holes or the metallic layer or the ornament of the label 1 can produce different visual effects to the label 1. Especially, the metallic layer and the ornament 11, whether peeled off or not, have the most manifest visual effect. The reason is that the plastic-made inner decorative layer, the outer protective layer, and the metallic layers will produce various vicissitudes when they are heated, and that the section of the ornament 11 will produce solid shapes after the ornament 11 is peeled off. Thus, the product formed integral with the label has both the function of fake prevention and the effect of value enhancement.

The method of manufacturing a product with the fake-preventing label, as shown in Fig. 15, includes a first step of placing a label in the mold cavity 40 of a mold 4 to be bonded with a product therein. A second step is to close the male and the female mold of the mold 4 together, and a third step is to inject material in the mold. Then a fourth step is to open the mold 4 after the product 5 is formed with the label 1 boned on its surface integral, A fifth step is to take the finished product with the label out of the mold. Than a sixth step is to peel the ornament 11 off the label 1, and the section of the removed ornament 11 will form solid shapes on the label 1, as shown in Fig. 16, thus obtaining a solid product with a fake-preventing label giving esthetic impression.

While the preferred embodiments of the invention have been described above, it will be recognized and understood that various modifications may be made therein and the appended claims are intended to cover all such modifications that may fall within the spirit and scope of the invention.

## Claims

1. A fake-preventing label formed integral with a product in a mold comprising:
an inner decorative layer having its surface printed with designs and letters, said inner decorative layer bored with plural holes closely located to one another;
an outer protective layer bonded with the surface of said inner decorative layer, said protective layer bored with plural holes closely located to one another; and
said label placed in a mold in which a product is to be formed, said label bonded with a product in a mold after said product is injection molded, thus obtaining a product formed integral with said fake-preventing label.

2. The fake preventing label formed integral with a product in a mold as claimed in Claim 1, wherein said outer protective layer is provided with no holes.

3. The fake-preventing label formed integral with a product in a mold as claimed in Claim 1, wherein said inner decorative layer and said outer protective layer respectively have a specific section bored with holes.

4. The fake-preventing label formed integral with a product in a mold as claimed in Claim 1, wherein said inner decorative layer and said outer protective layer respectively have a partial section bored with many very fine holes.

5. The fake preventing label formed integral with a product in a mold as claimed in claim 1, wherein an ornaments is provided between said inner decorative layer and said outer protective layer.

6. The fake-preventing label formed integral with a product in a mold as claimed in Claim 1, wherein said outer protective layer is provided with an ornament.

7. The fake-preventing label formed integral with a product in a mold as claimed in Claim 1, wherein said inner decorative layer is provided with an ornament.

8. The fake-preventing label formed integral with a product in a mold as claimed in Claim 1, wherein said inner decorative layer and said outer protective layer are respectively provided with an ornament.

9. The fake-preventing label formed integral with a product in a mold as claimed in Claim 1, wherein said inner decorative layer and said outer protective layer respectively have a section formed with a recess.

10. The fake-preventing label formed integral with a product in a mold as claimed in Claim 1, wherein said inner decorative layer and said outer protective layer respectively have a section formed with a recess.

11. A method of manufacturing a product with a fake-preventing label comprising:
a first step of placing a label in a mold cavity of a mold;
a second step of closing a male and a female mold of said mold together;
a third step of injecting material in said mold for forming a product therein;
a fourth step of opening said mold after the product is formed with the label bonded flatly on the surface of said product;
a fifth step of taking the product with the label out of said mold; and,
a sixth step of peeling the ornament off the label.
